# EUROPEAN PATENT APPLICATION

(11) **EP 4 385 651 A1**
(43) Date of publication of application: **19.06.2024**
(21) Application number: 22881351.5
(22) Date of filing: 12.10.2022
(51) Int. Cl.: B23K 11/31, B23K 11/11, B23K 11/36, F16B 2/06, H01M 50/531, H01M 50/528, B23K 101/36

(54) **WELDING ROD FASTENING METHOD AND WELDING DEVICE HAVING WELDING ROD VERTICALLY FASTENED THERETO BY SAME**

(30) Priority: 15.10.2021 KR 20210137087
(71) Applicant: LG Energy Solution, Ltd., Seoul 07335 (KR)
(72) Inventor: KIM, Doyoung, Daejeon 34122 (KR); KIM, Jun Wan, Daejeon 34122 (KR); LEE, Sunil, Daejeon 34122 (KR)
(74) Representative: Goddar, Heinz J.
(86) International application number: PCT/KR2022/015419
(87) International publication number: WO 2023/063724

(57) **Abstract**

Provided are a welding rod fastening method capable of fixing the welding rod perpendicularly to a welding surface to reduce a spattering phenomenon in which fine metal particles scatter around a welded portion due to an incorrect welding angle when welding, and a welding device in which the welding rod is fastened vertically thereby. The welding rod fastening method is a method for fixing a welding rod to a welding rod fixing block having a welding rod housing hole formed therein, and includes the steps of (a) inserting the welding rod into a welding rod housing hole of the welding rod fixing block, and (b) fastening fixing screws to each of spaces on both sides of the welding rod housing hole on the basis of the welding rod to tighten the welding rod housing hole, wherein the fixing screws fastened to each of spaces on both sides of the welding rod housing hole are tightened so that tightening directions are opposite to each other.

## Description

### [Technical Field]

The present application claims the benefit of priority based on Korean Patent Application No. 10-2021-0137087 filed on October 15, 2021, the entire contents of which are incorporated herein by reference.

The present invention relates to a welding rod fastening method and a welding device in which the welding rod is vertically fastened by the method, and more specifically, to a welding rod fastening method capable of reducing a spatter phenomenon in which fine metal particles scatter around a welded portion due to incorrect welding angle when welding, by vertically fixing the welding rod to a welding surface, and a welding device in which the welding rod is vertically fastened by this method.

### [Background Art]

With the explosive increase in technological development and demand for mobile devices and automobiles, more research is being conducted on secondary batteries with high energy density and discharge voltage, and excellent output stability. Examples of such secondary batteries include lithium secondary batteries such as lithium-sulfur batteries, lithium ion batteries, and lithium ion polymer batteries. In addition, the secondary batteries as described above can be classified into a cylindrical type, a prismatic type, a pouch type, and the like depending on their shape.

In the secondary battery, an electrode assembly including a cathode, an anode, and a separation membrane interposed between the cathode and the anode is stacked and housed in a battery case together with an electrolyte. In this way, the electrode assembly housed in the battery case can be classified into a jelly-roll type wound with the separation membrane interposed between a sheet-like cathode and anode coated with an active material, a stack type in which a number of cathodes and anodes are sequentially laminated with a separation membrane interposed therebetween, and a stack/folding type in which stack type unit cells are wound by a long separation membrane.

In addition, an electrode tab connected to a lead part for connecting an electrode and an external terminal is provided at one end of electrodes (the cathode and the anode) of such a secondary battery (particularly, a secondary battery including the stack-type electrode assembly) to protrude to one side of the electrode assembly. At this time, the lead part and the electrode tab are mainly connected through welding methods such as a resistance welding (welding which turns the joint part into a semi-melting state by the resistance heat generated by applying a large current to a joint part of a base material, and applies pressure to the joint part and join it), a laser welding, and an ultrasonic welding.

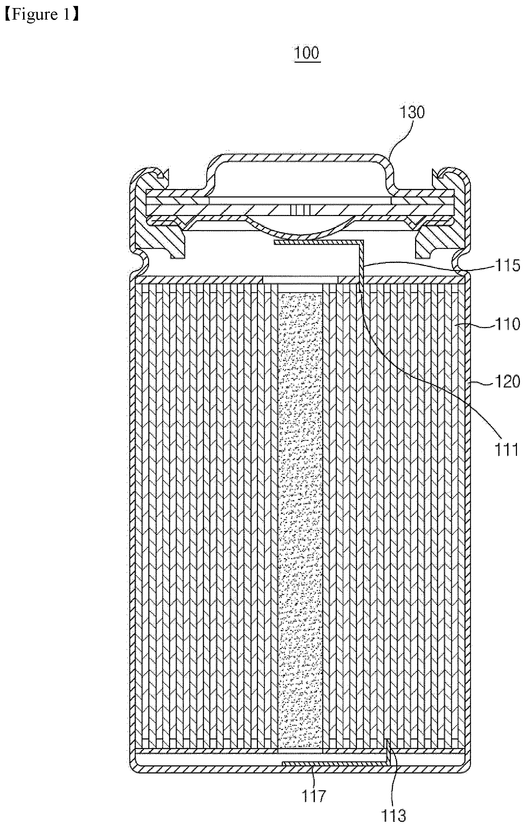

Further, in the case of a cylindrical secondary battery, an anode tab is resistance-welded to a can, and thus, the can serves as an anode terminal. FIG. 1 is a schematic side cross-sectional view of a conventional cylindrical secondary battery. More specifically, as shown in FIG. 1, the cylindrical secondary battery 100 includes an electrode assembly 110 including a cathode 111, an anode 113 and a separation membrane, a can 120 that houses the electrode assembly 110 inside and has an opening portion formed at an upper end, and a cap assembly 130 that finishes or closes the opening portion of the upper end of the can 120. A cathode tab 115 is connected to the cathode 111 of the electrode assembly 110, and the cathode tab 115 is connected to the cap assembly 130 by welding. In addition, an anode tab 117 is connected to the anode 113 of the electrode assembly 110, and the anode tab 117 is connected to the bottom surface of the can 120 through resistance welding.

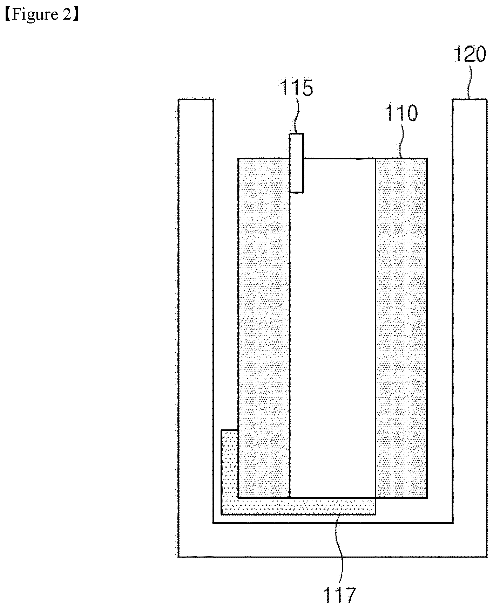

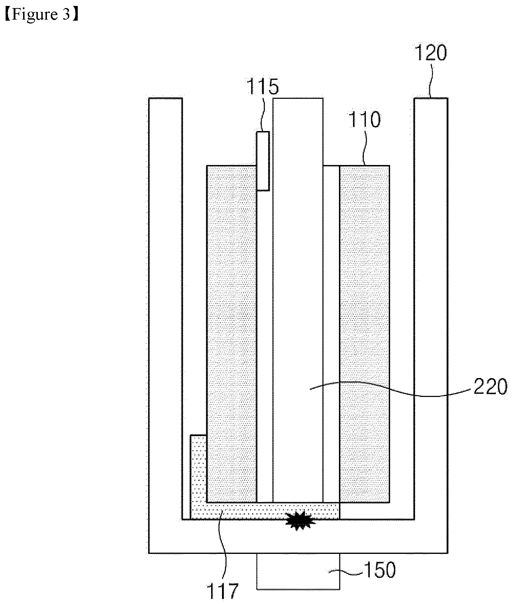

FIG. 2 is a schematic diagram showing an aspect before an anode tab of a conventional cylindrical secondary battery is resistance-welded to a can, and FIG. 3 is a schematic diagram showing an aspect in which the welding rod is inserted into the conventional cylindrical secondary battery and the anode tab is welded to the can. As shown in FIGS. 1 and 2 mentioned above, the anode tab 117 of the conventional cylindrical secondary battery 100 is connected to the anode, extended, and withdrawn to the lower end of the electrode assembly 110. Further, the anode tab 117 is electrically connected to the bottom surface of the can 120 through the resistance welding.

More specifically, as shown in FIG. 2, the electrode assembly 110 is housed inside the can 120 through the upper opening portion of the can 120. After that, as shown in FIG. 3, the welding rod 220 is inserted into a hollow formed at the center of the electrode assembly 110 from the upper opening portion of the can 120 for welding the anode tab 117 and the bottom surface of the can 120, and then, the anode tab 117 and the bottom surface of the can 120 are welded and fixed by the welding rod 220 inserted into the can 120 and the welding member 150 provided outside the can 120.

However, when the anode tab is resistance-welded to the can as described above, if the welding angle is not correct, a spattering phenomenon in which the molten metal particles scatter around the welded part may occur, leading to a problem of low-voltage failure. That is, this is due to the effect of the verticality of the welding rod, and when the welding rod is not perpendicular to the welding surface of a welded object (i.e., anode tap and can) (i.e., when the verticality is distorted), the contact area decreases, and a spattering phenomenon occurs due to excessive melting caused by an increase in the amount of generated heat.

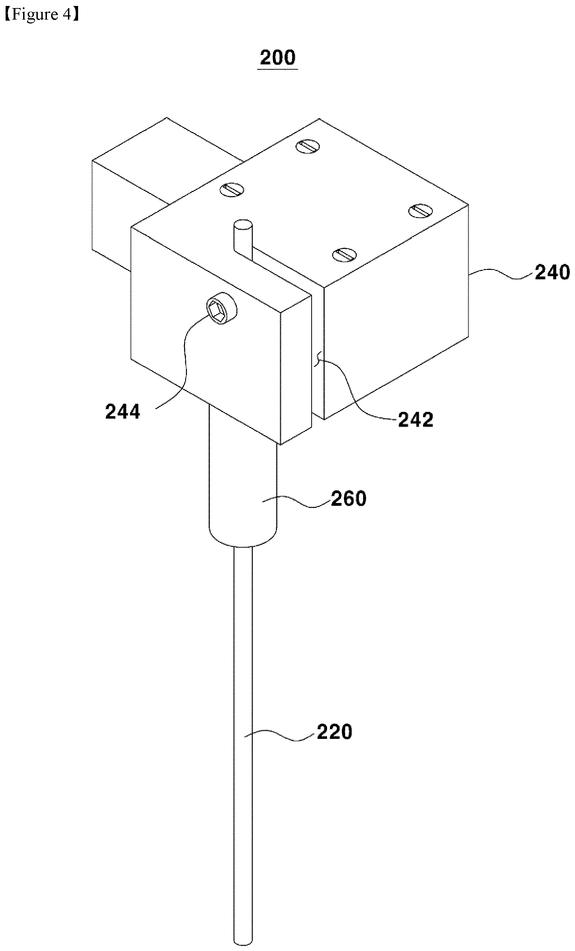

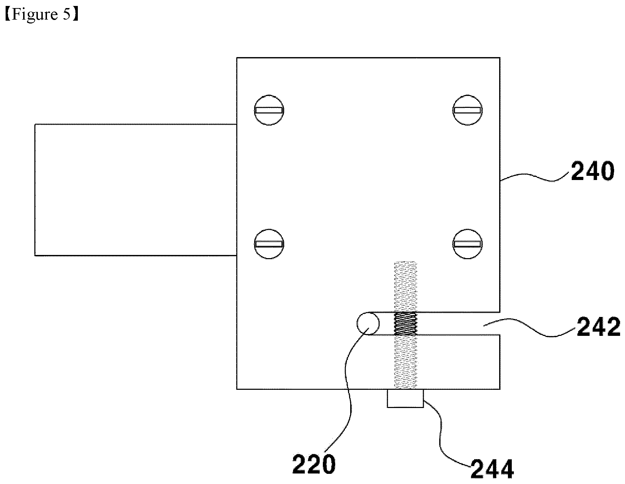

FIG. 4 is a top perspective view of a conventional welding device provided with a welding rod, and FIG. 5 is a plan view of the conventional welding device provided with a welding rod. Until now, a welding device having a configuration as shown in FIGS. 4 and 5 has been used to weld the anode tab of the cylindrical secondary battery to the bottom surface of the can. That is, in the conventional welding device 200 as shown in FIGS. 4 and 5, a welding rod 220 and a welding rod fixing block 240 that houses the welding rod 220 are fastened together. A welding rod housing hole 242 is formed in the welding rod fixing block 240, and one fixing screw 244 for tightening the welding rod housing hole 242 is provided to support the welding rod 220 (reference numeral 260 of FIG. 4 is a stopper). That is to say, the existing welding rod is fastened by inserting the welding rod 220 into the welding rod housing hole 242 of the welding rod fixing block 240 and then tightening the welding rod housing hole 242 with one fixing screw 244.

That is, hitherto, the anode tab of the cylindrical secondary battery has been welded to the bottom surface of the can through the welding device as shown in FIGS. 4 and 5. However, when fastening the welding rod 220 by tightening the welding rod housing hole 242 with one fixing screw 244 as in the related art, since the welding rod fixing block 240 is twisted in the tightening direction by the fastening force (that is, the tightening force), positional deformation occurs. As a result, there is a problem that even the welding rods 220 fastened to the welding rod fixing block 240 are twisted together and located asymmetrically with respect to the ground. The phenomenon that the welding rod fixing block 240 and the welding rod 220 are twisted at an aimed position (vertical to the ground) is due to the reason that the fixing screw 244 is tightened only in one direction.

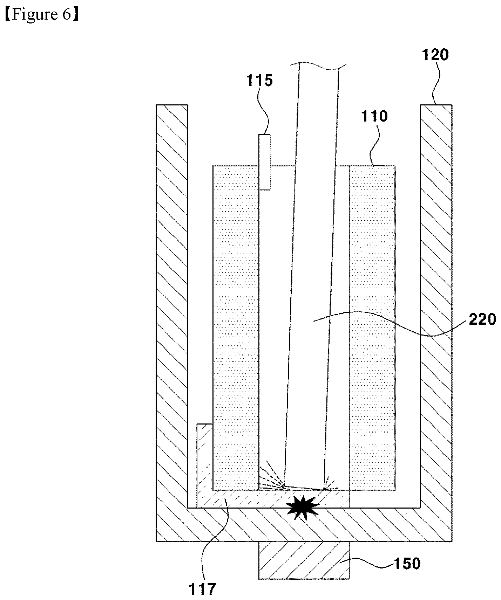

FIG. 6 is a diagram showing an aspect in which a welding rod inserted into a conventional cylindrical secondary battery is not fixed perpendicularly to the welding surface, and thus fine metal particles scatter around the welded portion. As shown in FIG. 6, when the welding rod 220 is twisted, since the welding rod 220 and the welding surfaces of the object to be welded (that is, the anode tab 117 and the can) are not perpendicular to each other, the contact area decreases, and a spattering phenomenon occurs in which the fine metal particles scatter around the welded portion due to excessive melting caused by an increase in the amount of generated heat.

Therefore, it is necessary to develop a welding rod fastening method capable of fixing the welding rod perpendicularly to the welding surface to reduce the occurrence of spattering phenomenon when welding, and a welding device in which the welding rod is fastened vertically thereby.

### [Disclosure]

### [Technical Problem]

Accordingly, an object of the present invention is to provide a welding rod fastening method capable of fixing the welding rod perpendicularly to the welding surface to reduce a spattering phenomenon in which fine metal particles scatter around the welded portion due to an incorrect welding angle when welding, and a welding device in which the welding rod is fastened vertically thereby.

### [Technical Solution]

In order to achieve the above object, the present invention provides a method for fastening a welding rod to a welding rod fixing block having a welding rod housing hole formed therein, including the steps of: (a) inserting the welding rod into a welding rod housing hole of the welding rod fixing block; and (b) fastening fixing screws to each of spaces on both sides of the welding rod housing hole on the basis of the welding rod to tighten the welding rod housing hole, wherein the fixing screws fastened to each of spaces on both sides of the welding rod housing hole are tightened so that tightening directions are opposite to each other.

Further, the present invention also provides a welding device used for the welding rod fastening method, including: a welding rod; and a welding rod fixing block including a welding rod housing hole that houses the welding rod, and two fixing screws that tighten the welding rod housing hole, wherein the two fixing screws are provided so that tightening directions are opposite to each other.

### [Advantageous Effects]

The welding rod fastening method and the welding device in which the welding rod is fastened vertically by this method according to the present invention have an advantage capable of reducing a spattering phenomenon in which fine metal particles scatter around the welded portion due to an incorrect welding angle when welding, by fixing the welding rod perpendicularly to the welding surface.

### [Description of Drawings]

FIG. 1 is a schematic side cross-sectional view of a conventional cylindrical secondary battery.
FIG. 2 is a diagram schematically showing an aspect before an anode tab of the conventional cylindrical secondary battery is resistance-welded to a can.
FIG. 3 is a diagram schematically showing an aspect in which a welding rod is inserted into the conventional cylindrical secondary battery to weld an anode tab to the can.
FIG. 4 is a top perspective view of the conventional welding device equipped with the welding rod.
FIG. 5 is a plan view of the conventional welding device equipped with the welding rods.
FIG. 6 is a diagram showing an aspect in which the welding rod inserted into the conventional cylindrical secondary battery is not fixed perpendicularly to the welding surface, and fine metal particles scatter around a welded portion.
FIGS. 7 and 8 are top perspective views showing an aspect in which two fixing screws are tightened in opposite directions to fasten the welding rod perpendicularly to the ground in the welding device according to an embodiment of the present invention.
FIG. 9 is a front view showing an aspect in which the two fixing screws are inserted into a welding rod fixing block according to FIG. 7 or 8 and the welding rod is fastened vertically with respect to the ground.
FIG. 10 is a top plan view of a state in which the welding rod is fastened perpendicularly to the ground.

### [Best Mode]

Hereinafter, the present invention will be described in detail with reference to the accompanying drawings.

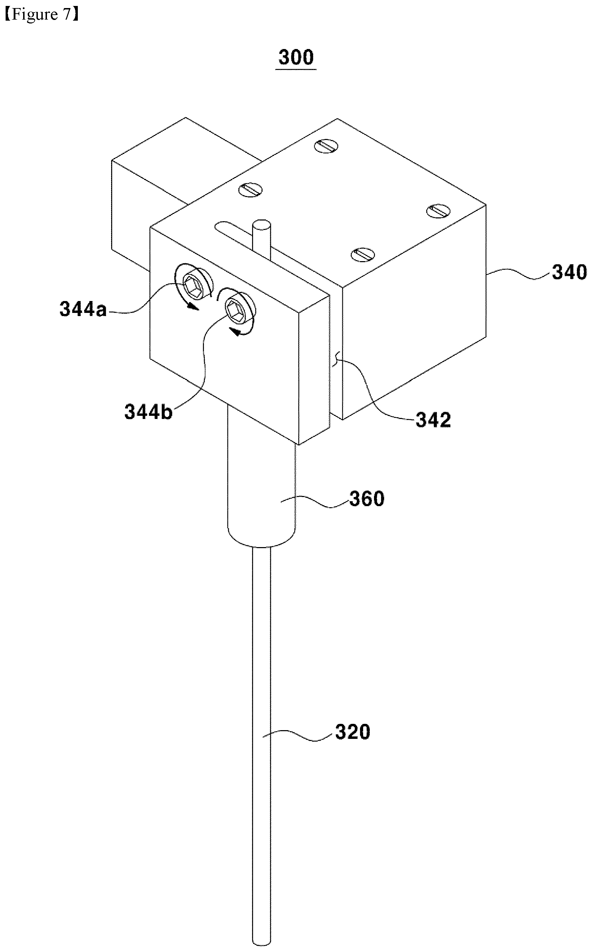

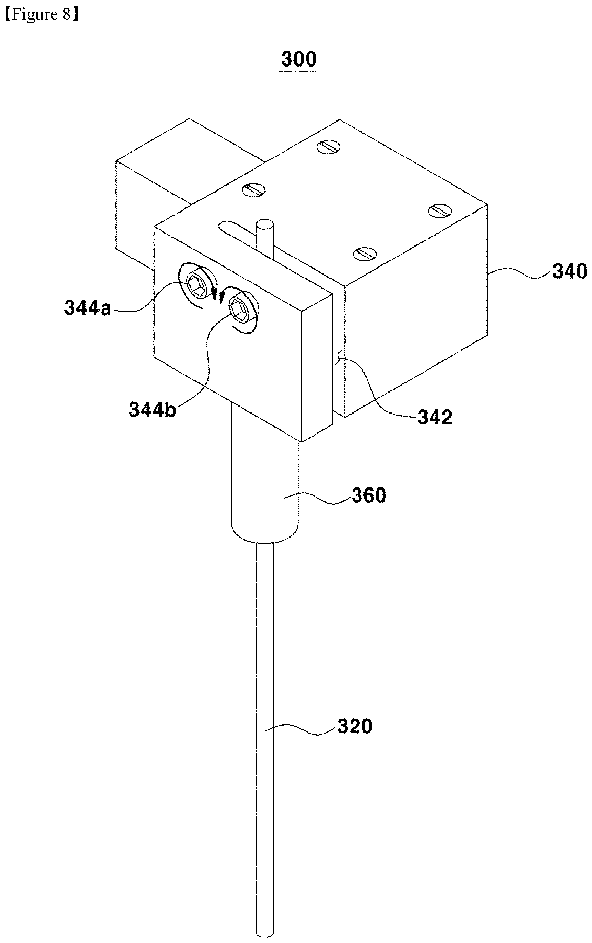

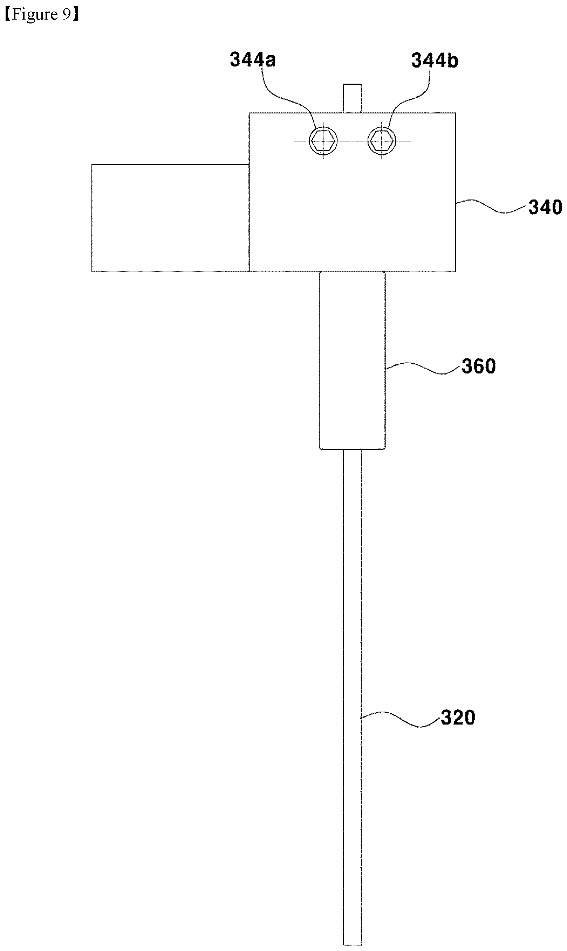

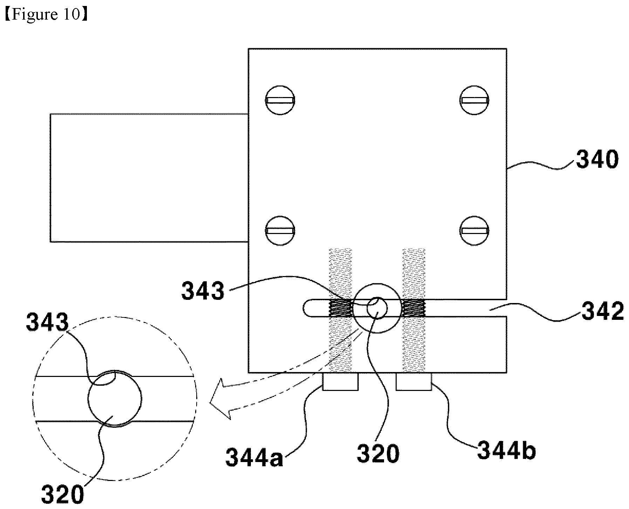

FIGS. 7 and 8 are top perspective views showing an aspect in which two fixing screws are tightened in opposite directions to fasten a welding rod perpendicularly to the ground in a welding device according to an embodiment of the present invention. FIG. 7 corresponds to an aspect in which two fixing screws are each tightened outward according to an embodiment of the present invention, and FIG. 8 corresponds to an aspect in which two fixing screws are each tightened inward according to another embodiment of the invention. Further, FIG. 9 is a front view showing an aspect in which the two fixing screws are inserted into a welding rod fixing block according to FIG. 7 or 8 and the welding rod is fastened perpendicularly to the ground, and FIG. 10 is a top plan view of a state in which the welding rod is fastened perpendicularly to the ground.

Referring to FIGS. 7 to 10, a welding rod fastening method according to the present invention is a method of fastening a welding rod 320 to a welding rod fixing block 340 formed with a welding rod housing hole 342 (in a direction perpendicular to the ground), which includes (a) a step of inserting the welding rod 320 into a welding rod housing hole 342 of the welding rod fixing block 340, and (b) a step of fastening fixing screws 344a and 344b to each space on both sides of the welding rod housing hole 342 on the basis of the welding rod 320 to tighten the welding rod housing hole 342, in which the fixing screws 344a and 344b fastened to each space on both sides of the welding rod housing hole 342 are tightened so that tightening directions are opposite to each other.

Most secondary batteries require a process of welding an electrode tab. Especially, in a cylindrical secondary battery, the welding process is importantly applied in the assembly process or the like of the secondary batteries, such as an anode tab being resistance-welded to the can so that the can serves as an anode terminal. However, as shown in FIGS. 4 and 5, when the welding rod 220 is fastened with only one fixing screw 244, due to the tightening force that is tightened in only one direction, the welding rod fixing block 240 and the welding rod 220 fastened thereto are twisted together. Thus, as shown in FIG. 6, a problem arises that the welding rod 220 is located asymmetrically with respect to the ground. When the welding rod 220 is twisted in this manner, since the welding rod 220 and the welding surface of the object to be welded (that is, the anode tab 117 and the can) are not perpendicular to each other, the contact area decreases, and a spattering phenomenon occurs in which fine metal particles scatter around the welded portion due to excessive melting caused by an increase in the amount of generated heat.

Therefore, the present applicant has invented a welding rod fastening method and a welding device in which the welding rod is vertically fastened by this method, which can fix the welding rod vertically to the welding surface to reduce the occurrence of spattering phenomenon when welding.

Referring again to FIGS. 7 to 10 to explain the welding rod fastening method of the present invention, the welding rod fastening method according to the present invention is a method of fastening the welding rod 320 to the welding rod fixing block 340 having the welding rod housing hole 342 formed therein in a direction perpendicular to the ground, in which two or more fixing screws, not one, are used for fastening the welding rod, unlike a conventional welding device.

In order to fasten the welding rod according to the present invention, first, a process of inserting the welding rod 320 into the welding rod housing hole 342 of the welding rod fixing block 340 to position the welding rod 320 in the direction perpendicular to the ground is performed (step a). Since this process is similarly applied even to the conventional method for fastening the welding rod, a detailed description thereof will be omitted. Further, the shape or material of the welding rod 320 and the welding rod fixing block 340 may also be the same as those of the related art. A stopper 360 is also not different from the conventional one, which is provided under the welding rod fixing block 340 to wrap the welding rod 320 after the welding rod 320 is inserted into the welding rod housing hole 342 of the welding rod fixing block 340. For reference, the stopper 360 can serve to lightly grip the welding rod 320, while fastening the welding rod 320 to the welding rod fixing block 340.

After the welding rod 320 is inserted into the welding rod housing hole 342 of the welding rod fixing block 340 and the welding rod 320 is located in the direction perpendicular to the ground as described above, a process of tightening the welding rod housing hole 342 by fastening the fixing screws 344a and 344b to each space on both sides of the welding rod housing hole 342 on the basis of the welding rod 320 on one side of the welding rod fixing block 340 is performed (step b). The process itself of simply inserting the fixing screw from the side surface of the welding rod fixing block and tightening the welding rod housing hole is not different from the conventional one.

However, unlike conventional welding rod fastening method fastens the welding rod with only one fastening screw, the present invention uses two or more fastening screws (at least two fastening screws 344a and 344b). In addition, according to the present invention, at least one fixing screw is inserted in the same number into each of the spaces on both sides of the welding rod housing hole 342 on the basis of the welding rod 320. That is, in order to impart the same fastening force to each of both sides on the basis of the welding rod 320, the same number of fixing screws need to be inserted into each of the spaces on both sides of the welding rod housing hole 342 on the basis of the welding rod 320. From the viewpoint of process simplification and efficiency, although each one fixing screw needs may be inserted into each of the spaces on both sides of the welding rod housing hole 342 on the basis of the welding rod 320 as shown in FIGS. 7 to 10, when there is a need to impart a stronger fastening force, even an additional fixing screw may be further inserted. However, even in this case, it is of course necessary to insert the same number of fixing screws on each of both sides on the basis of the welding rod 320.

In addition, in the present invention, an even number of fixing screws are inserted and located on the same line in the vertical direction to the central axis of the welding rod 320, as shown in FIG. 9. In addition, the fixing screws 344a and 344b, which are fastened to each of both sides on the basis of the welding rod 320, need to be located at the same distance from the central axis of the welding rod 320. In particular, the fixing screws 344a and 344b inserted into each of the spaces on both sides of the welding rod housing hole 342 on the basis of the welding rod 320 need to be tightened in opposite directions to each other.

That is, the fixing screws 344a and 344b, which are inserted on each of both sides on the basis of the welding rod 320, can be inserted and fastened by being tightened outward as shown in FIG. 7, and can also be inserted and fastened, by being tightened inward as shown in FIG. 8. That is, when one fixing screw of the two fixing screws 344a and 344b is tightened outward and the other fixing screw is tightened inward, finally the two fixing screws 344a and 344b turn in the same direction. As a result, the welding rod 320 and the welding rod fixing block 340 fail to be perpendicular to the ground, which causes the same problem as in a conventional welding rod fastening method. Therefore, the fixing screws 344a and 344b, which are fastened on each of both sides on the basis of the welding rod 320, need to be inserted and fastened into the welding rod fixing block 340, by being necessarily tightened in opposite directions to each other. In addition, according to this method, the welding rod 320 is held perpendicular to the ground while the two fixing screws 344a and 344b are being tightened or even after fastened and inserted. Even if that does not the case, twisting of the welding rod 320 may be minimized by fastening the fixing screws 344a and 344b.

However, even if the fixing screws 344a and 344b inserted on each of both sides on the basis of the welding rod 320 are tightened in opposite directions to each other as described above, when only one of the fixing screws 344a and 344b is tightened first, the welding rod 320 and the welding rod fixing block 340 fail to be perpendicular to the ground, and even in this case, the same problem as in the conventional welding rod fastening method may occur. Accordingly, it is preferable to simultaneously tighten to fasten the fixing screws 344a and 344b to be inserted into each of both sides on the welding rod 320.

As described above, when the welding rod 320 is fixed perpendicularly to the ground or the welding surface, welding is performed toward the objects to be welded. On the other hand, although the above description has been limited to the application of welding the anode tab of the cylindrical secondary battery to the bottom surface of the can, it is also, of course, utilized for application of welding the lead part and the electrode tab of a stack type electrode assembly. In addition to this, it is also applicable to any field that welding (especially resistance welding) is required, and in particular it is difficult to maintain the verticality of the welding rod, and thus a spattering phenomenon occurs, which causes problems such as product quality.

Next, a welding device according to the present invention will be described. Referring again to FIGS. 7 to 10, the welding device 300 of the present invention is a welding device used for the above-described welding rod fastening method (or a welding device in which the welding rod 320 and the welding rod fixing block 340 are fastened through the welding rod fastening method), which includes the welding rod 320 (located perpendicular to the ground) and the welding rod fixing block 340 including the welding rod housing hole 342 that houses the welding rod 320 and two fixing screws 344a and 344b that tighten the welding rod housing hole 342, wherein the two fixing screws 344a and 344b are provided so that their tightening directions are opposite to each other.

The welding rod 320 is housed by being screwed into the welding rod housing hole 342 of the welding rod fixing block 340. Although FIGS. 7 to 9 show a structure in which the upper end of the welding rod 320 protrudes upward from the uppermost end surface of the welding rod fixing block 340, the welding rod 320 is not necessarily housed in the welding rod fixing block 340 with this structure. That is, it is sufficient if the upper end of the welding rod 320 is located above the fixing screws 344a and 344b. This is because it is sufficient to fix the welding rod 320 through the fixing screws 344a and 344b. Also, since the lower end of the welding rod 320 allows welding between the objects to be welded, it is preferable to be closely to the object to be welded as possible, even if the welding rod 320 is perpendicular to the ground or the welding surface.

The welding rod fixing block 340 is formed with a welding rod housing hole 342 for housing the welding rod 320, and two screw grooves into which two fixing screws 344a and 344b for tightening the welding rod housing hole 342 can be inserted. The welding rod housing hole 342 may be formed by opening at one end of the side surface of the welding rod fixing block 340, as shown in FIGS. 8 and 10. Here, the side surface of the welding rod fixing block 340 may be a surface connected to the side surface of the welding rod fixing block 340 into which the fixing screws 344a and 344b are inserted, that is, any one surface that does not face the side surface of the welding rod fixing block 340 into which the fixing screws 344a and 344b are inserted.

The welding rod housing hole 342 may be opened at one end of the side surface of the welding rod fixing block 340 and vertically perforated to the inside so that the welding rod 320 can be inserted to the inside of the welding rod fixing block 340 and fixed with screws. At this time, although a distance from one end of the side surface of the welding rod fixing block 340 to the inner side may vary depending on the point at which the welding rod 320 is located and the positions at which the two fixing screws 344a and 344b are inserted, the distance needs to be set to the extent that at least both two fixing screws 344a and 344b can be inserted.

That is, the welding rod housing hole 342 needs be formed to an inner side more than a point at which the fixing screw (344a of FIG. 10) inserted to the innermost side is located on the basis of the side opening portion in which the welding rod housing hole 342 is formed. However, this is only an embodiment, and, as long as the welding rod 320 can be housed to be fastened and fixed by two fixing screws 344a and 344b, the shape of the welding rod housing hole 342 is not particularly limited. As shown in FIG. 10, a welding rod fixing groove 343, which allows the welding rod 320 to be stably fixed in the welding rod housing hole 342 without lateral movement, may be formed from top to bottom in the welding rod housing hole 342.

In addition, the two fixing screws 344a and 344b need to be provided across the spaces on both sides of the welding rod housing hole 342 on the basis of the welding rod 320, while being located on each of both sides on the basis of the welding rod 320. Preferably, the two fixing screws 344a and 344b are provided across the welding rod housing hole 342 in a direction perpendicular to the central axis of the welding rod 320, and located on the same line of the direction perpendicular to the central axis of the welding rod 320 as shown in FIG. 9. That is to say, in other words, the two fixing screws 344a and 344b are provided on the outer peripheral surface of the welding rod fixing block 340 so that they can be tightened, and thus the two fixing screws 344a and 344b pass through one side wall of the welding rod housing hole 342 and are screwed to the other side wall.

In addition, the two fixing screws 344a and 344b are located at the same distance from the central axis of the welding rod 320, and their tightening directions are opposite to each other. For example, the fixing screws 344a and 344b may be in the state of being tightened outward as shown in FIG. 7, and may be in the state of being tightened inward as shown in FIG. 8. In addition, A stopper 360 provided to wrap around the welding rod 320 may be located below the welding rod fixing block 340. As described above, the stopper 360 may serve to lightly hold the welding rod 320 while fastening it to the welding rod fixing block 340.

Although the present invention has been described with reference to the preferred embodiments described above, it will be easily understood by those skilled in the art to which the present invention pertains that the present invention is not limited thereto and various modifications and variations may be made unless departed from the idea and scope of the claims described below.

### [Description of symbols]

100: Cylindrical secondary battery (110: electrode assembly, 111: cathode, 113: anode, 115: cathode tab, 117: anode tab, 120; can, 130: cap assembly, 150: welding member)
200, 300: Welding device
220, 320: Welding rod
240, 340: Welding rod fixing block
242, 342: Welding rod housing hole
343: Welding rod fixing groove
244, 344: Fixing screw
260, 360: Stopper

## Claims

1. A method for fastening a welding rod to a welding rod fixing block having a welding rod housing hole formed therein, the method comprising the steps of:
(a) inserting the welding rod into the welding rod housing hole of the welding rod fixing block; and
(b) fastening fixing screws to each of spaces on both sides of the welding rod housing hole on the basis of the welding rod to tighten the welding rod housing hole,
wherein the fixing screws fastened to each of spaces on both sides of the welding rod housing hole are tightened so that tightening directions are opposite to each other.

2. The method for fastening the welding rod according to claim 1,
wherein the fixing screws fastened on each of both sides on the basis of the welding rod are simultaneously tightened to fix the welding rod.

3. The method for fastening the welding rod according to claim 1,
wherein the fixing screws fastened on each of both sides on the basis of the welding rod are each located at the same distance from a central axis of the welding rod.

4. The method for fastening the welding rod according to claim 1,
wherein twisting of the welding rod is minimized by fastening the fixing screw.

5. The method for fastening the welding rod according to claim 1,
wherein the welding rod fastening method is used for welding an anode tab of a cylindrical secondary battery to the bottom surface of a can.

6. A welding device used for the welding rod fastening method according to claim 1, the welding device comprising:
a welding rod; and
a welding rod fixing block including a welding rod housing hole that houses the welding rod, and two fixing screws that tighten the welding rod housing hole,
wherein the two fixing screws are provided so that tightening directions are opposite to each other.

7. The welding device according to claim 6,
wherein the two fixing screws are each provided across spaces on both sides of the welding rod housing hole on the basis of the welding rod.

8. The welding device according to claim 7,
wherein the two fixing screws are provided across the welding rod housing hole in a direction perpendicular to the central axis of the welding rod, and located on the same line perpendicular to the central axis of the welding rod.

9. The welding device according to claim 6,
wherein the two fixing screws are each located at the same distance from the central axis of the welding rod.

10. The welding device according to claim 6,
wherein the welding rod housing hole is formed to open at one end of a side surface of the welding rod fixing block and to be perforated vertically to the inside.

11. The welding device according to claim 10,
wherein the welding rod housing hole is formed to an inner side more than a point at which the fixing screw inserted to an innermost side is located, on the basis of a side opening portion in which the welding rod housing hole is formed.

12. The welding device according to claim 10,
wherein a welding rod fixing groove is formed in the welding rod housing hole from an upper end to a lower end.

13. The welding device according to claim 6,
wherein the two fixing screws pass through one side wall of the welding rod housing hole and are screwed into the other wall.

14. The welding device according to claim 6,
wherein the two fixing screws are provided to be tightenable on an outer peripheral surface of the welding rod fixing block.
